# EUROPEAN PATENT APPLICATION

(11) **EP 4 835 723 A1**
(43) Date of publication of application: **04.11.2026**
(21) Application number: 24912563.4
(22) Date of filing: 18.12.2024
(51) Int. Cl.: G06F 30/18, G06F 30/12, G06F 113/14

(54) **PIPELINE DIAGRAM DESIGN ASSISTANCE METHOD, PIPELINE DIAGRAM DESIGN ASSISTANCE DEVICE, AND PIPELINE DIAGRAM DESIGN ASSISTANCE PROGRAM**

(30) Priority: 27.12.2023 JP 2023221255
(71) Applicant: KUBOTA CORPORATION, Osaka-shi, Osaka 530-0011 (JP)
(72) Inventor: TOWAKI, Masaaki, Amagasaki-shi, Hyogo 660-0095 (JP); HAYASHI, Mitsuo, Tokyo 104-8307 (JP); ISHIDA, Masatsugu, Tokyo 104-0032 (JP); SHIMOIKE, Masahiro, Tokyo 104-0032 (JP); HANAUE, Koichi, Tokyo 104-0032 (JP)
(74) Representative: Müller-Boré & Partner Patentanwälte PartG mbB
(86) International application number: PCT/JP2024/044726
(87) International publication number: WO 2025/142674

(57) **Abstract**

A pipeline diagram design support method for designing a three-dimensional pipeline diagram configured with a plurality of pipes by using a computer includes: a two-dimensional pipeline information input step of inputting a two-dimensional planned line indicating a laying route of a pipe; a three-dimensional pipeline attribute information input step of inputting three-dimensional pipeline attribute information necessary for converting the two-dimensional planned line into a three-dimensional planned line; a three-dimensional planned line conversion step of converting the two-dimensional planned line into the three-dimensional planned line based on the three-dimensional pipeline attribute information; a three-dimensional piping layout step of performing a piping layout process on the three-dimensional planned line; and a three-dimensional pipeline diagram generation step of generating the three-dimensional pipeline diagram by drawing a three-dimensional symbol of each pipe obtained by the three-dimensional piping layout along the three-dimensional planned line.

## Description

### Technical Field

The present invention relates to a pipeline diagram design support method, a pipeline diagram design support device, and a pipeline diagram design support program.

### Background Art

Conventionally, when a pipeline diagram creation support device with an application program for creating a pipeline diagram installed thereon is used to design a new pipeline to be laid or design a pipeline to replace an existing pipeline, a two-dimensional planned piping route, that is, a two-dimensional planned line is created by designating a position to dispose a fitting such as a bent pipe as an intersection point on a pipeline diagram layer superimposed on a two-dimensional map layer displayed on a screen via a pointing device, and coupling the fittings disposed at the respective intersection points to each other by a plurality of straight pipes.

Then, in order to couple the fittings disposed at the respective intersection points of the two-dimensional planned line to each other by the straight pipes, a piping layout process is performed to automatically compute the number of the straight pipes to be disposed along the two-dimensional planned line, a joint angle of a joint, presence or absence of a cut pipe, etc.

### Citation List

### Patent Literature

Patent Literature 1: Japanese Unexamined Patent Application Publication No. 2021-189923
Patent Literature 2: Japanese Unexamined Patent Application Publication No. 2023-85036

### Summary of Invention

### Technical Problem

In recent years, 3D mapping technology has been developed, which three-dimensionally visualizes underground objects, such as power lines, communication lines, gas pipes, water pipes, and sewer pipes buried under roads, by using a computer. There is a need for a three-dimensional design support device that integrates the aforementioned pipeline diagram creation support device for designing a two-dimensional pipeline diagram with the 3D mapping technology.

An object of the present invention is to provide a pipeline diagram design support method, a pipeline diagram design support device, and a pipeline diagram design support program, which are capable of efficiently designing a three-dimensional pipeline diagram by using a two-dimensional pipeline diagram designed by an existing pipeline diagram creation support device.

### Solution to Problem

To achieve the above-described object, a first feature of a pipeline diagram design support method according to the present invention is a pipeline diagram design support method for designing a three-dimensional pipeline diagram configured with a plurality of pipes by using a computer. The method includes: a two-dimensional pipeline information input step of inputting two-dimensional pipeline information including a background diagram and a two-dimensional planned line drawn in the background diagram, the two-dimensional planned line indicating a laying route of a pipe; a three-dimensional pipeline attribute information input step of inputting three-dimensional pipeline attribute information including buried depth information of a pipe necessary for converting the two-dimensional planned line input at the two-dimensional pipeline information input step into a three-dimensional planned line; a three-dimensional planned line conversion step of converting the two-dimensional planned line into the three-dimensional planned line based on the three-dimensional pipeline attribute information input at the three-dimensional pipeline attribute information input step; a three-dimensional piping layout step of performing a piping layout process on the three-dimensional planned line; and a three-dimensional pipeline diagram generation step of generating the three-dimensional pipeline diagram by drawing a three-dimensional symbol of each pipe obtained at the three-dimensional piping layout step along the three-dimensional planned line.

The background diagram and the two-dimensional planned line depicted on a two-dimensional plane, which are input at the two-dimensional pipeline information input step, are converted into the three-dimensional planned line at the three-dimensional planned line conversion step based on the three-dimensional pipeline attribute information input at the three-dimensional pipeline attribute information input step. The three-dimensional planned line converted at the three-dimensional planned line conversion step is subjected to the piping layout process at the piping layout step, and the three-dimensional symbol of each pipe obtained by the piping layout is drawn along the three-dimensional planned line, whereby the three-dimensional pipeline diagram is generated.

In addition to the first feature described above, the pipeline diagram design support method has a second feature that the three-dimensional planned line conversion step converts the two-dimensional planned line into the three-dimensional planned line by using, as the buried depth information, a value obtained by adding half a length of an outer diameter of a pipe obtained based on nominal diameter information of the pipe to ground cover information.

The value for use as the buried depth information is obtained by adding half the length of the outer diameter of the pipe obtained based on the nominal diameter information to the ground cover information, whereby an axial center of the pipe can be arranged along the three-dimensional planned line.

In addition to the first feature described above, the pipeline diagram design support method has a third feature that the three-dimensional symbol drawn at the three-dimensional pipeline diagram generation step is configured with a three-dimensional pipe body drawing model and a three-dimensional joint drawing model acquired from a drawing model database, and the drawing model database includes: pipe material information for individual-based management of pipes; a pipe body drawing model ID and a joint drawing model ID assigned to each of the pipes managed by the pipe material information; and a three-dimensional pipe body drawing model and a three-dimensional joint drawing model respectively associated with the pipe body drawing model ID and the joint drawing model ID.

In the drawing model database, the pipe material information is registered as well as a plurality of three-dimensional pipe body drawing models and three-dimensional joint drawing models such that the pipe body drawing model ID and the joint drawing model ID are assigned to each pipe included in the pipe material information, and the three-dimensional pipe body drawing model and the three-dimensional joint drawing model are respectively identified by the pipe body drawing model ID and the joint drawing model ID. In the three-dimensional pipeline diagram generation step, a specific pipe material to be drawn is selected from pipe materials included in the pipe material information, and the three-dimensional pipe body drawing model and the three-dimensional joint drawing model are acquired based on the pipe body drawing model ID and the joint drawing model ID assigned to that pipe material, whereby the three-dimensional pipeline diagram can be smoothly created.

A first feature of a pipeline diagram design support device according to the present invention is a pipeline diagram design support device for designing a three-dimensional pipeline diagram configured with a plurality of pipes. The device includes: a two-dimensional pipeline information input unit configured to input two-dimensional pipeline information including a background diagram and a two-dimensional planned line drawn in the background diagram, the two-dimensional planned line indicating a laying route of a pipe; a three-dimensional pipeline attribute information input unit configured to input three-dimensional pipeline attribute information including buried depth information of a pipe necessary for converting the two-dimensional planned line input by the two-dimensional pipeline information input unit into a three-dimensional planned line; a three-dimensional planned line conversion unit configured to convert the two-dimensional planned line into the three-dimensional planned line based on the three-dimensional pipeline attribute information input by the three-dimensional pipeline attribute information input unit; a three-dimensional piping layout unit configured to perform a piping layout process on the three-dimensional planned line; and a three-dimensional pipeline diagram generation unit configured to generate the three-dimensional pipeline diagram by drawing a three-dimensional symbol of each pipe obtained by the three-dimensional piping layout unit along the three-dimensional planned line.

In addition to the first feature described above, the pipeline diagram design support device has a second feature that the three-dimensional planned line conversion unit converts the two-dimensional planned line into the three-dimensional planned line by using, as the buried depth information, a value obtained by adding half a length of an outer diameter of a pipe obtained based on nominal diameter information of the pipe to ground cover information.

In addition to the first feature described above, the pipeline diagram design support device has a third feature that the three-dimensional symbol drawn by the three-dimensional pipeline diagram generation unit is configured with a three-dimensional pipe body drawing model and a three-dimensional joint drawing model acquired from a drawing model database, and the drawing model database includes: pipe material information for individual-based management of pipes; a pipe body drawing model ID and a joint drawing model ID assigned to each of the pipes managed by the pipe material information; and a three-dimensional pipe body drawing model and a three-dimensional joint drawing model respectively associated with the pipe body drawing model ID and the joint drawing model ID.

A first feature of a pipeline diagram design support program according to the present invention is a pipeline diagram design support program that designs a three-dimensional pipeline diagram configured with a plurality of pipes. The program causes a computer to execute: a two-dimensional pipeline information input step of inputting two-dimensional pipeline information including a background diagram and a two-dimensional planned line drawn in the background diagram, the two-dimensional planned line indicating a laying route of a pipe; a three-dimensional pipeline attribute information input step of inputting three-dimensional pipeline attribute information including buried depth information of a pipe necessary for converting the two-dimensional planned line input at the two-dimensional pipeline information input step into a three-dimensional planned line; a three-dimensional planned line conversion step of converting the two-dimensional planned line into the three-dimensional planned line based on the three-dimensional pipeline attribute information input at the three-dimensional pipeline attribute information input step; a three-dimensional piping layout step of performing a piping layout process on the three-dimensional planned line; and a three-dimensional pipeline diagram generation step of generating the three-dimensional pipeline diagram by drawing a three-dimensional symbol of each pipe obtained by the three-dimensional piping layout step along the three-dimensional planned line.

### Advantageous Effects of Invention

As described above, with the present invention, it is possible to provide a pipeline diagram design support method, a pipeline diagram design support device, and a pipeline diagram design support program, which are capable of efficiently designing a three-dimensional pipeline diagram by using a two-dimensional pipeline diagram designed by an existing pipeline diagram creation support device.

### Brief Description of Drawings

Fig. 1 is a diagram illustrating a pipeline diagram design support device.
Fig. 2A is a diagram illustrating a two-dimensional planned line indicating a laying route of a main pipe and a branch pipe connecting designated intersection points.
Fig. 2B is a diagram illustrating a three-dimensional planned line, which is converted from a two-dimensional planned line based on attribute information.
Fig. 3A is a diagram illustrating a two-dimensional planned line superimposed on a three-dimensional map.
Fig. 3B is a diagram illustrating a three-dimensional planned line converted based on a two-dimensional planned line.
Fig. 3C is a diagram illustrating a pipeline diagram, in which a three-dimensional pipeline model obtained by piping layout of a three-dimensional planned line is drawn.
Fig. 4A is a diagram illustrating a procedure for automatically generating an intersection point and a control point.
Fig. 4B is a diagram illustrating a procedure for automatically generating an intersection point and a control point.
Fig. 4C is a diagram illustrating a procedure for automatically generating an intersection point and a control point.
Fig. 4D is a diagram illustrating a procedure for automatically generating an intersection point and a control point.
Fig. 5A is a diagram illustrating a two-dimensional drawing model of a straight pipe.
Fig. 5B is a diagram illustrating a two-dimensional drawing model of a fitting.
Fig. 5C is a diagram illustrating a three-dimensional drawing model of a straight pipe.
Fig. 5D is a diagram illustrating a three-dimensional drawing model of a fitting.
Fig. 6 is a diagram illustrating mutual relation between a two-dimensional drawing model and a three-dimensional drawing model.
Fig. 7 is a flowchart illustrating a pipeline diagram design support method.
Fig. 8A is a flowchart illustrating a method for creating a piping diagram according to a three-dimensional planned line.
Fig. 8B is a diagram illustrating an operation method used for the method for creating a piping diagram according to a three-dimensional planned line.
Fig. 9 is a diagram illustrating a procedure for automatically avoiding an obstacle in a three-dimensional pipeline diagram design support method.

### Best Mode for Carrying out the Invention

Hereinafter, a pipeline diagram design support method, a pipeline diagram design support device, and a pipeline diagram design support program according to the present invention will be described based on the drawings.

### [Block Diagram of Pipeline Diagram Design Support Device]

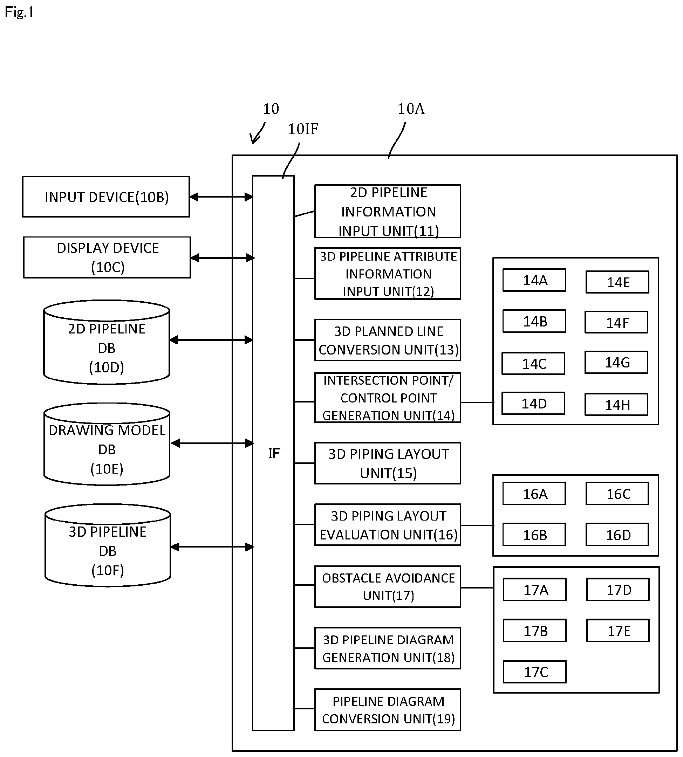

A pipeline diagram design support device 10 is realized by a computer as a computing machine executing an application program for pipeline diagram design support. Fig. 1 shows a functional block configuration of the pipeline diagram design support device 10.

The pipeline diagram design support device 10 includes: a computer main body 10A; an input device 10B, such as a keyboard or a mouse as a pointing device, coupled to the computer main body 10A; a display device 10C, such as a touch-panel display device; and memory devices 10D, 10E, 10F. The memory device 10D is a two-dimensional pipeline database, the memory device 10E is a drawing model database, and the memory device 10F is a three-dimensional pipeline database.

The two-dimensional pipeline database 10D stores: a two-dimensional background diagram illustrating buildings, roads, etc.; a two-dimensional planned line disposed on the background diagram; a two-dimensional pipeline diagram obtained by piping layout of the two-dimensional planned line; etc. The drawing model database 10E stores, in an associated manner: pipe material data, that is, a plurality of pieces of pipe information defining specifications, such as a pipe type including a fitting and a straight pipe as well as a diameter; two-dimensional symbols and three-dimensional symbols of respective pipes; etc. The three-dimensional pipeline database 10F stores: a three-dimensional map illustrating underground objects such as power lines, communication lines, gas pipes, water pipes, and sewer pipes buried under roads; a three-dimensional planned line; a three-dimensional pipeline diagram obtained by a piping layout process of the three-dimensional planned line; etc. Note that the two-dimensional pipeline database 10D and the three-dimensional pipeline database 10F may be integrated into a pipeline database.

The computer main body 10A includes a CPU board and a memory board, as well as a plurality of input-output interface circuits 10IF. A storage device such as an internal SSD or hard disk is also coupled thereto via the input-output interface circuit 10IF. The input-output interface circuit 10IF includes: interface circuits for data input to and output from the input device 10B and the display device 10C; interfaces for reading data from and writing data on the memory devices 10D, 10E, 10F; interfaces for communication processes with other external devices; and the like.

The above-described application program for pipeline diagram design support is distributed by storing it in a storage medium configured with a non-volatile optical disk such as CD-ROM and DVD-ROM, or a non-volatile semiconductor memory such as USB memory; installed on the computer main body 10A; and executed under control of OS of the computer main body 10A, thereby functioning as the pipeline diagram design support device 10. Note that the computer main body 10A realizing the present invention includes an aspect configured with a standalone computer and an aspect in which the functions are divided among a plurality of computers capable of communicating with each other.

The computer main body 10A includes a two-dimensional pipeline information input unit 11, a three-dimensional pipeline attribute information input unit 12, a three-dimensional planned line conversion unit 13, an intersection point/control point generation unit 14, a three-dimensional piping layout unit 15, a three-dimensional piping layout evaluation unit 16, an obstacle avoidance unit 17, a three-dimensional pipeline diagram generation unit 18, a pipeline diagram conversion unit 19, etc., each being configured with an integrated circuit including a CPU, a register, etc. to function as an operation block as described later.

The two-dimensional pipeline information input unit 11 is a processing unit configured to read and input the background diagram and the two-dimensional planned line, which is drawn in the background diagram and indicates a laying route of a pipe, stored in the two-dimensional pipeline database 10D.

The three-dimensional pipeline attribute information input unit 12 is a processing unit configured to input attribute information necessary for converting the two-dimensional planned line input by the two-dimensional pipeline information input unit 11 into a three-dimensional planned line. The attribute information includes buried depth information of a pipeline to be laid along the two-dimensional planned line, information about an elevation of a ground surface, a pipe type and nominal diameter information of the pipeline, etc.

The three-dimensional planned line conversion unit 13 is a processing unit configured to convert the two-dimensional planned line into the three-dimensional planned line based on the three-dimensional pipeline attribute information input by the three-dimensional pipeline attribute information input unit 12.

The intersection point/control point generation unit 14 is a processing unit configured to automatically generate an intersection point IP and a control point CP from the three-dimensional planned line converted from the two-dimensional planned line, the unit including: a planned line acquisition unit 14A configured to acquire a planned line broken into a plurality of line elements; a bend angle calculation unit 14B configured to calculate a bend angle of a bending point, which is an intersection of the respective line elements; and a bending point attribute setting unit 14C configured to define an attribute of the bending point at least having the bend angle equal to or more than a predetermined threshold as an intersection point to dispose a fitting, and set an attribute of the bending point having the bend angle less than the predetermined threshold as a control point to dispose a straight pipe.

Additionally, the intersection point/control point generation unit 14 includes: a joint number calculation unit 14D configured to calculate the number of straight pipes that can be disposed on an arc when the line element is the arc, and calculate the number of joints from the number of the straight pipes; a maximum bending angle calculation unit 14E configured to calculate a maximum bending angle from the number of the joints and an allowable bend angle of the joint when the straight pipes are disposed on the arc; and an intersection-point-necessity-for-arc-portion determination unit 14F configured to compare the maximum bending angle with a central angle of the arc to determine necessity of the intersection point. Furthermore, the intersection point/control point generation unit 14 includes: a distance-between-bending-points detection unit 14G configured to detect an interval between the bending points; and an intersection-point-in-adjacent-portion setting unit 14H configured to extend the line segments on both sides of the bending points and set the intersection thereof as a new intersection point when the distance between the bending points is less than a predetermined threshold.

The three-dimensional piping layout unit 15 is a processing unit configured to automatically perform the piping layout process on the three-dimensional planned line, the processing unit disposing fittings at the intersection points IP of the three-dimensional planned line; calculating the number of straight pipes and presence or absence of a cut pipe for coupling the fittings disposed at the intersection points IP to each other; and disposing them along the three-dimensional planned line.

The three-dimensional piping layout evaluation unit 16 is a processing unit configured to evaluate appropriateness of a three-dimensional piping diagram resulting from the piping layout by the three-dimensional piping layout unit 15, the processing unit including: an evaluation point identifying unit 16A configured to identify positions of a plurality of pipe joints serving as evaluation points from the three-dimensional piping diagram obtained by the three-dimensional piping layout unit 15; an evaluation value calculation unit 16B configured to calculate, as an evaluation value, an added value of each shortest distance from each evaluation point to the three-dimensional planned line; a bending amount calculation unit 16C configured to calculate a bending amount by Newton's method, which gives the minimum evaluation value in a case of changing the bending amount of the pipe joint corresponding to each evaluation point; and a pipe joint adjustment unit 16D configured to move the position of the pipe joint such that the bending amount with the smallest evaluation value obtained at the bending amount calculation step can be achieved.

The obstacle avoidance unit 17 is a processing unit configured to set a laying route such that a pipeline is disposed to go around an obstacle buried underground, the processing unit including: an obstacle information input unit 17A configured to input obstacle information including a position of the obstacle buried underground; an interference determination unit 17B configured to determine whether there is interference between the obstacle information and a piping diagram; a necessary separation area calculation unit 17C configured to calculate a necessary separation area from the obstacle when the interference determination unit 17B determines the presence of the interference; an avoidance pattern presentation unit 17D configured to generate an avoidance pattern of the pipeline with the necessary separation area secured and present the same to an operator; and a piping diagram update unit 17E configured to update the piping diagram with a pipeline corresponding to the avoidance pattern selected by the operator.

The three-dimensional pipeline diagram generation unit 18 is a processing unit configured to draw each pipe constituting the three-dimensional piping diagram by using a three-dimensional symbol. The three-dimensional symbol is configured with a three-dimensional pipe body drawing model and a three-dimensional joint drawing model acquired from the drawing model database 10E.

The drawing model database 10E includes: pipe material information for individual-based management of pipes; a pipe body drawing model ID and a joint drawing model ID assigned to each of the pipes managed by the pipe material information; and the three-dimensional pipe body drawing model and the three-dimensional joint drawing model respectively associated with the pipe body drawing model ID and the joint drawing model ID, as well as a two-dimensional pipe body drawing model and a two-dimensional joint drawing model.

The pipeline diagram conversion unit 19 is a processing unit configured to convert the three-dimensional symbol into the two-dimensional symbol and vice versa by referring to the drawing model database 10E and display the resultant, so that the respective pipes in the three-dimensional piping diagram drawn with the three-dimensional symbols will be drawn with the two-dimensional symbols.

### [Pipeline Diagram Design Support Method]

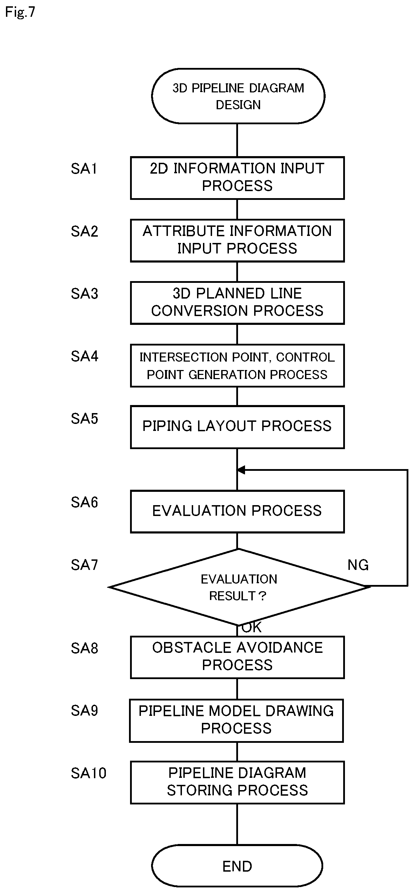

Hereinafter, a pipeline diagram design support method using the above-described pipeline diagram design support device will be described based on the flowchart of Fig. 7.

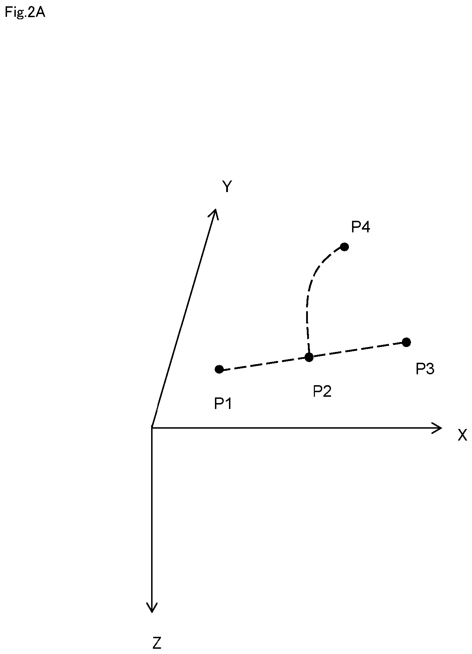

Fig. 2A describes one example of the two-dimensional planned line (indicated by broken lines) created on the XY plane where a map as the background diagram is shown. The two-dimensional planned line refers to a laying route of a pipe configured with polylines and splines through a plurality of points Pn (n=1, 2, ...) designated on the map displayed on the screen of the display device 10C by an operator using a pointing device.

In the laying route of the pipe, fittings and valves are disposed at predetermined positions, and the respective fittings and valves are coupled by straight pipes and cut pipes. In the present embodiment, an example using, as the straight pipe, an earthquake-resistant joint that allows bending at a predetermined angle will be described.

Such a two-dimensional planned line can be created using the pipeline diagram design support device of the present invention, or may be created in advance using a pipeline diagram design support device specialized in 2D. The two-dimensional pipeline information input unit 11 reads two-dimensional pipeline information including the background diagram and the above two-dimensional planned line created in advance and stored in the two-dimensional pipeline database 10D, and expands it in a working area set to a memory area of the pipeline diagram design support device (SA1).

The three-dimensional pipeline attribute information input unit 12 executes a process of inputting the three-dimensional pipeline attribute information including the buried depth information of a pipe necessary for converting the two-dimensional planned line input at the step SA1 into the three-dimensional planned line (SA2). The three-dimensional pipeline attribute information includes: geographic information such as an elevation and a ground cover of an area where a pipe is to be laid; and pipe information such as a pipe type and a nominal diameter of a pipe to be laid. When an operator selects the intersection point IP of the input two-dimensional planned line or a line segment connecting the intersection points IP with a mouse, options of the elevation, ground cover, and pipe information for the corresponding position are displayed, and the three-dimensional pipeline attribute information regarding the two-dimensional planned line is input by selecting the relevant items from the displayed options.

When the operator has completed the input process of the three-dimensional attribute information regarding the two-dimensional planned line, the three-dimensional planned line conversion unit 13 is activated to execute a three-dimensional planned line conversion process (SA3). The three-dimensional planned line conversion process is a process of calculating depth information of the respective intersection points IP and control points CP of the two-dimensional planned line based on the three-dimensional attribute information and expanding the resultant in the three-dimensional space.

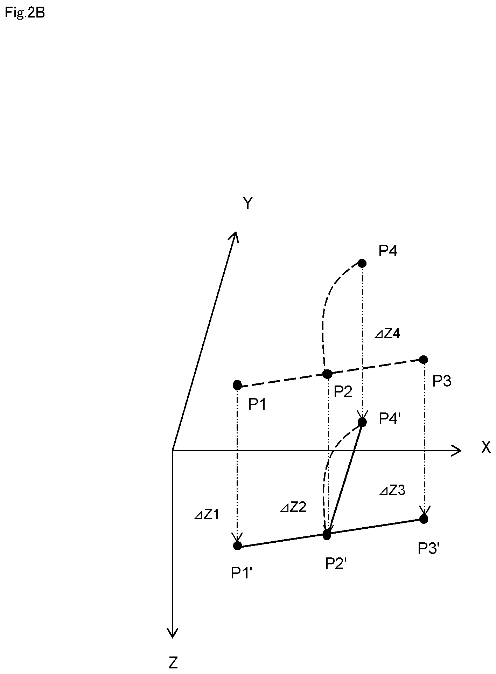

For points P1, P2, P3, P4 of the two-dimensional planned line shown in Fig. 2A, buried depth information ΔZ1, ΔZ2, ΔZ3, ΔZ4 are calculated, and line segments through the respective points P1', P2', P3', P4' give the three-dimensional planned line. In Fig. 2B, the three-dimensional planned line obtained in this manner is shown. As buried depth information ΔZ, a value obtained by adding half a length of an outer diameter of a pipe obtained based on nominal diameter information of the pipe to ground cover information is used. This process enables an axial center of the pipe to be arranged along the three-dimensional planned line.

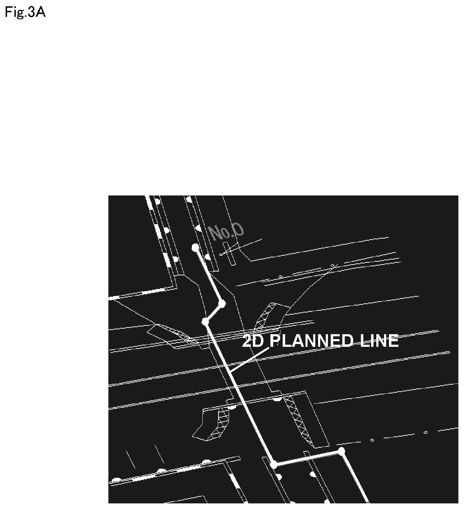

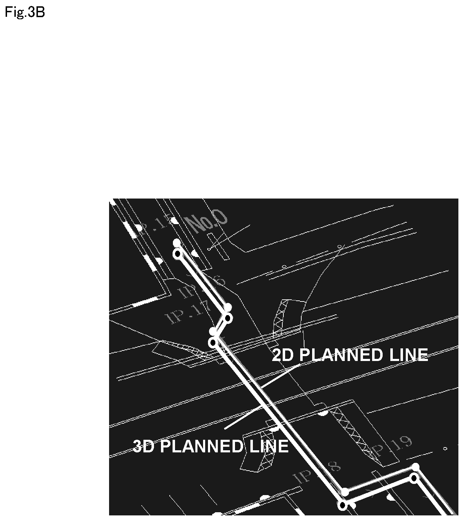

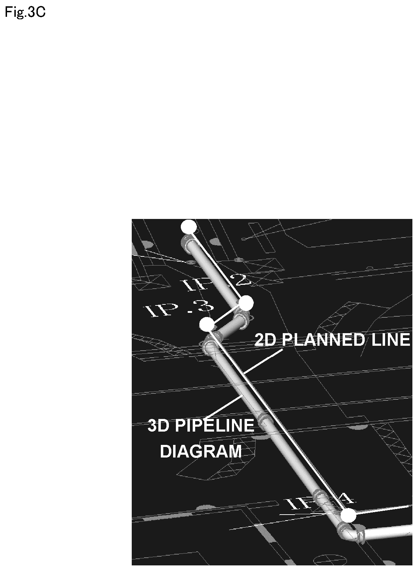

When the respective points Pn-1', Pn' have the different buried depth information ΔZ from each other, the planned line between them is subjected to proportional distribution based on the buried depth between the points Pn-1', Pn'. Alternatively, a new point Pm' is generated adjacent to any one of the points, i.e. Pn-1', the new point Pm' having the buried depth information corresponding to that of the other point Pn'; the planned line between the new point Pm' and the other point Pn' has a constant buried depth and a planned line coupling the new point Pm' to the one point Pn-1' is added. The operator selects either of them, such that the three-dimensional planned line is generated. The new point Pm' can be set directly above or below the one point Pn-1'. Fig. 3A shows the two-dimensional planned line whereas Fig. 3B shows the three-dimensional planned line generated based on the two-dimensional planned line. Moreover, Fig. 3C shows the three-dimensional pipeline diagram drawn with the three-dimensional symbols by a three-dimensional pipeline diagram generation process as described later.

It may be difficult to use the intersection point IP and the control point CP designated on the two-dimensional planned line directly for the three-dimensional planned line converted in this manner. When piping layout is performed on the three-dimensional planned line, it is necessary for an operator to evaluate in advance whether curved piping has a possible curvature or arrangement with an acceptable length of a cut pipe is possible. However, such evaluation in advance is difficult for an operator with little experience. Thus, the operator activates the intersection point/control point generation unit 14, whereby the intersection point IP and the control point CP are automatically generated for the three-dimensional planned line (SA4).

In the intersection point/control point generation unit 14, the three-dimensional planned line converted by the three-dimensional planned line conversion unit 13 is acquired. The two-dimensional planned line input by the two-dimensional pipeline information input unit 11 is previously broken into a plurality of line elements configured with polylines or splines during designing, and the three-dimensional planned line is also broken into a plurality of line elements. In other words, the polyline is broken into a line segment and an arc, while the spline is subjected to broken line approximation. A length of the broken line is set based on a length of a straight pipe to be laid, for example, set to the length of the straight pipe or half that length.

Firstly, a starting point and an end point of the planned line as well as a crossing point of the planned line are set as the intersection points IP. Next, a bend angle calculation process is executed to calculate a bend angle of a bending point where the respective line elements intersect, and a bending point attribute setting process is executed to define an attribute of the bending point having the bend angle at least equal to or more than a predetermined threshold as the intersection point IP to dispose a fitting and set an attribute of the bending point having the bend angle less than the predetermined threshold as the control point CP to dispose a straight pipe. The predetermined threshold is set based on a minimum angle of a bent pipe, i.e. 5.625°. Additionally, for the spline, the point on the spline having a maximum curvature and the bend angle of the approximate broken line equal to or more than a threshold is defined as the intersection point IP whereas the point having the bend angle of the approximate broken line less than the threshold is defined as the control point CP.

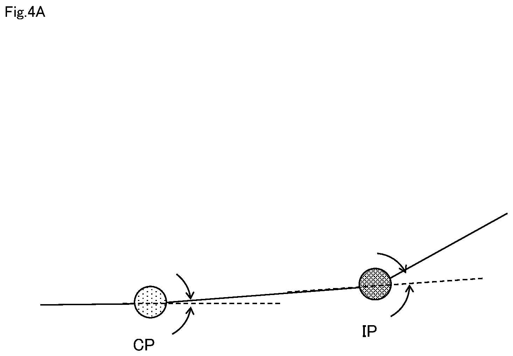

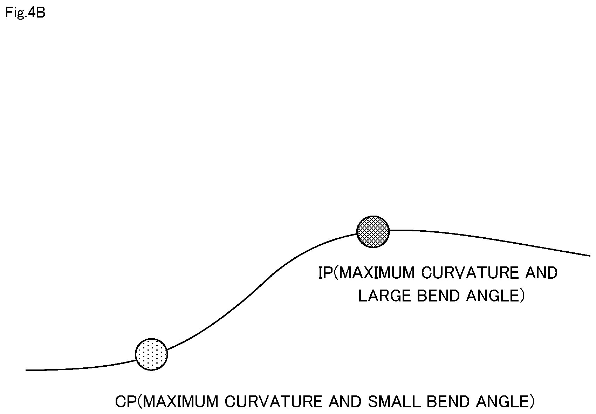

Fig. 4A shows a part of the planned line broken into three straight line elements, illustrating an example with the first bending point set as the control point CP and the second bending point set as the intersection point IP. Fig. 4B shows an example in which the first bending point of the spline having the maximum curvature and the bend angle less than the threshold is set as the control point CP, while the second bending point having the maximum curvature and the bend angle equal to or more than the threshold is set as the intersection point IP.

The intersection point/control point generation unit 14 further executes: a joint number calculation process of calculating the number of straight pipes that can be disposed on an arc when the line element is the arc, and calculating the number of joints from the number of the straight pipes; a maximum bending angle calculation process of calculating a maximum bending angle from the number of the joints and an allowable bend angle of the joint (set to 2° in the present embodiment) when the straight pipes are disposed on the arc; and an intersection-point-necessity-for-arc-portion determination process of comparing the maximum bending angle with the central angle of the arc to determine necessity of the intersection point IP.

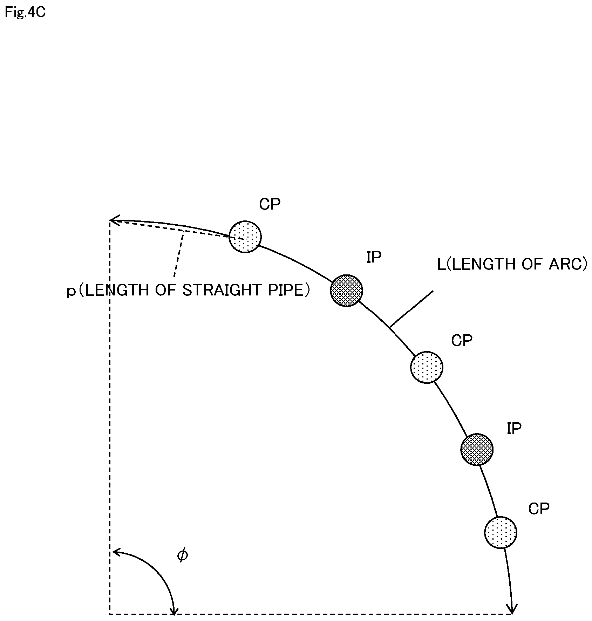

As shown in Fig. 4C, from a length L of the arc and a length "p" of the straight pipe, the number N of the straight pipes to be laid in the arc portion is obtained by the following formula. 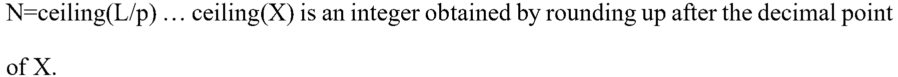 N=ceiling(L/p) ... ceiling(X) is an integer obtained by rounding up after the decimal point of X.

From the number of the straight pipes and the allowable bending angle α, the maximum bending angle θ is obtained by the following formula. $θ = \left(N-1\right) \times α$

When the maximum bending angle θ is equal to or smaller than the central angle φ of the arc, it is determined that it is unnecessary to insert the bent pipe, and a position to connect the straight pipe is specified as the control point CP. When the maximum bending angle θ is greater than the central angle φ of the arc, the number of the bent pipes as fittings to be inserted is obtained according to a difference between the maximum bending angle θ and the central angle φ, and a position to dispose the bent pipe is specified as the intersection point IP.

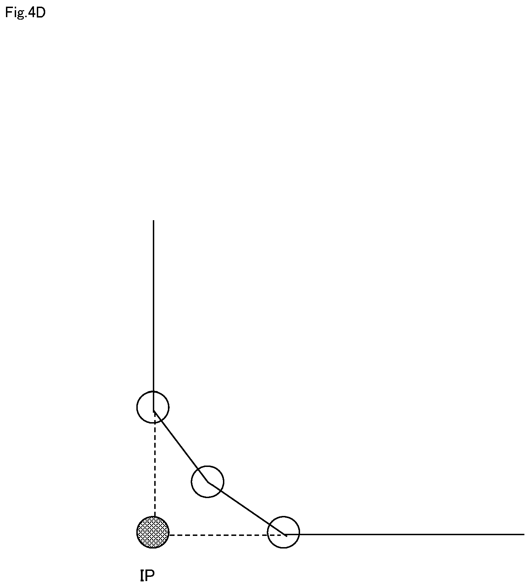

As shown in Fig. 4D, the intersection point/control point generation unit 14 further executes: a distance-between-bending-points detection process of detecting an interval between the bending points (indicated by white circles in the figure); and an intersection-point-in-adjacent-portion setting process of extending line segments on both sides of the bending points and setting an intersection point thereof as a new intersection point IP when a distance between the bending points is less than a predetermined threshold. The predetermined threshold refers to a minimum length of a cut pipe coupling the fittings disposed at the bending points to each other. Figs. 4A to 4D are depicted in two dimensions for ease of understanding, but the actual processes are in three dimensions.

The automatic setting process of the intersection point IP and the control point CP by the intersection point/control point generation unit 14 as described above is applicable not only to the three-dimensional planned line but also to the two-dimensional planned line. It is possible to automatically set the intersection point IP and the control point CP on the two-dimensional planned line in the same manner as described above.

For the three-dimensional planned line with the intersection points IP and the control points CP disposed thereon, the three-dimensional piping layout unit 15 performs the piping layout process (SA5). Basically, similarly to a known automatic piping layout process on a two-dimensional planned line, prescribed fittings are disposed at the intersection points IP and straight pipes and necessary cut pipes are arranged between the fittings. In other words, a distance between the intersection points IP is obtained along the planned line, and an integer obtained by dividing that distance by a length of the straight pipe is calculated as the number of the straight pipes and a fraction as the length of the cut pipe. When the planned line is a curved line, the bend angle of the joint is temporarily set such that the straight pipe can be disposed on that curved line.

The three-dimensional piping diagram is evaluated for its appropriateness by the three-dimensional piping layout evaluation unit 16, and the bend angle of the straight pipe is adjusted based on the result thereof (SA6, SA7).

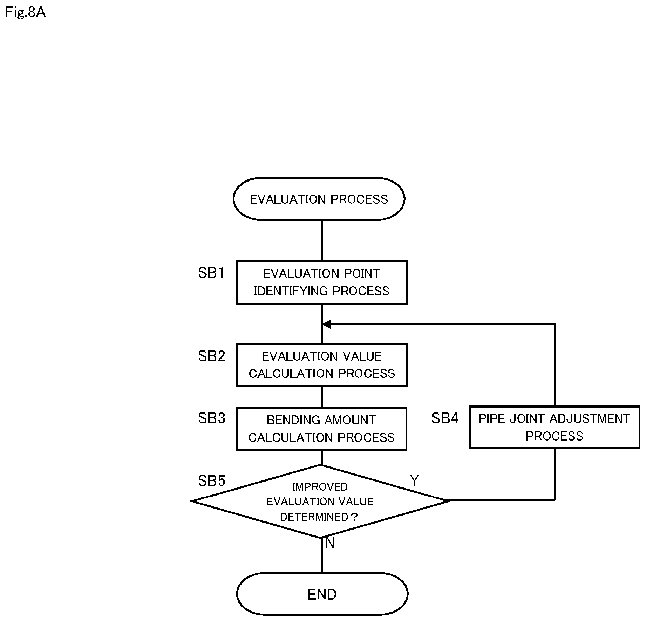

As shown in Fig. 8A, the three-dimensional piping layout evaluation unit 16 executes: an evaluation point identifying process of identifying positions of a plurality of pipe joints as evaluation points from the three-dimensional piping diagram obtained by the three-dimensional piping layout unit 15 (SB1); an evaluation value calculation process of calculating, as an evaluation value, an added value of each shortest distance from each evaluation point to the three-dimensional planned line (SB2); a bending amount calculation process of calculating a bending amount by Newton's method, which gives the smallest evaluation value in a case of changing the bending amount of the pipe joint corresponding to each evaluation point (SB3); a pipe joint adjustment process of moving the position of the pipe joint such that the bending amount with the smallest evaluation value obtained at the bending amount calculation step can be achieved (SB4); and a determination process of repeatedly executing the steps SB2, SB3, SB4 until the evaluation value is saturated (SB5).

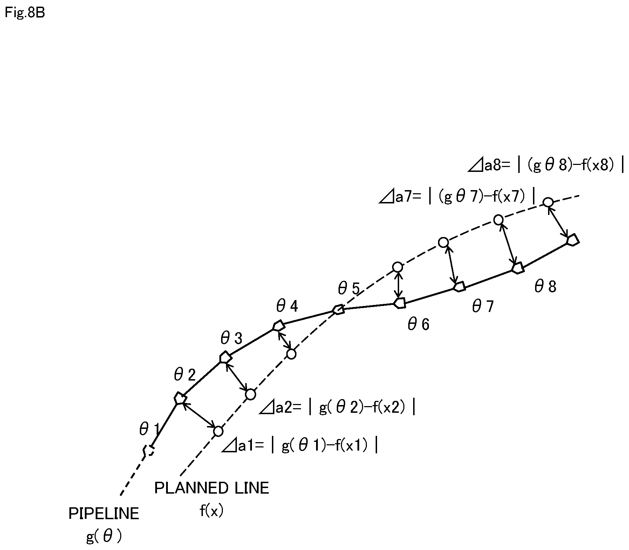

As shown in Fig. 8B, the three-dimensional piping layout evaluation unit 16 defines the joint portion of the straight pipes in the three-dimensional piping diagram as the evaluation point, and acquires the bend angle θ={θi} of the joint portion as an initial value. The shortest distance Δai (i=1, 2 ,...) from each joint portion to the planned line f(x) is calculated by the following formula, and a residual vector thereof is calculated as an evaluation target value "e", which is the added value. $Δai = \left|gi\left(θi\right)-f\left(xi\right)\right|$ wherein f(x) is a function of the planned line, and gi(θ) is a function of the joint angle representing the i-th evaluation point. $e = \left\{Δai\right\}$

In the evaluation value calculation process, for the evaluation target value, response calculation of the evaluation target value to an amount of change of the joint angle is calculated by using Newton's method to obtain a corner joint angle that gives a minimum 2-norm of the evaluation target value. In other words, using a value of Jacobian matrix: J=(δei/δθj), an update amount of the joint angle as a parameter is calculated such that a residual will be minimum. $Δθ = \left\{Δθi\right\} = {\left({J}^{T}J\right)}^{- 1} {J}^{T} e * w ; w < 1 ,$ w represents an update weight.

On the optimized three-dimensional piping diagram, an obstacle avoidance process (SA8) is executed by the obstacle avoidance unit 17. The obstacle avoidance unit 17 executes: an obstacle information input process of inputting the obstacle information including the position of the obstacle buried underground; an interference determination process of determining whether there is interference between the obstacle information and the piping diagram; a necessary separation area calculation process of calculating the necessary separation area from the obstacle when the presence of the interference is determined by the interference determination process; an avoidance pattern presentation process of presenting the avoidance pattern of the pipeline with the necessary separation area secured to an operator; and a piping diagram update process of updating the piping diagram with the pipeline corresponding to the avoidance pattern selected by the operator. Moreover, when the two or more necessary separation areas from the obstacle continuously exist, an integrated necessary separation area calculation process is executed in the necessary separation area calculation process to calculate an integrated necessary separation area, which encompasses two or more necessary separation areas.

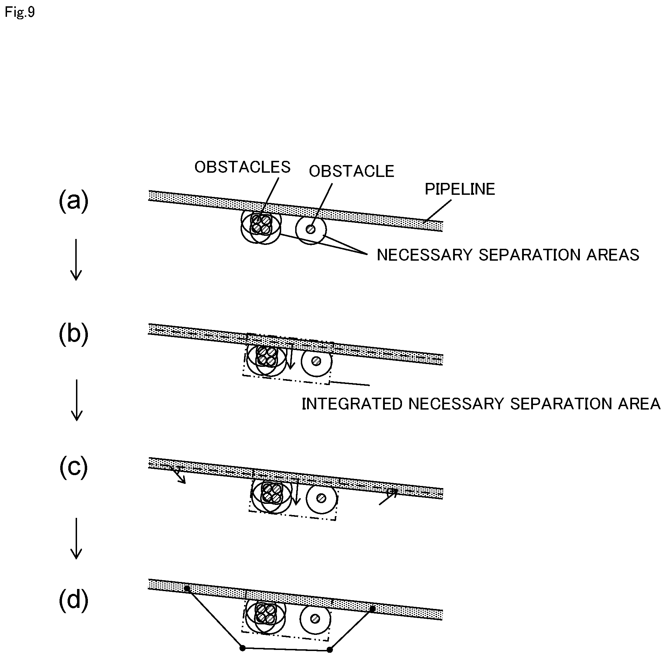

Figs. 9A to 9D show diagrams illustrating a procedure for the obstacle avoidance process. Fig. 9A shows a pipeline disposed along the planned line and obstacles (hatched circles) recognized by the obstacle information input process. In the figure, a single obstacle and four closely gathered obstacles are shown.

As shown in Fig. 9B, when it is determined by the interference determination process that the obstacle interferes with the pipeline or they are so close to each other that there is a risk of disturbing construction work during the construction, the necessary separation area (circle area surrounding the obstacle) is calculated by the necessary separation area calculation process. When two or more necessary separation areas from the obstacle continuously exist or are adjacent to each other, the integrated necessary separation area (rectangular area indicated by a dash-dot-dot line), which encompasses the respective necessary separation areas, is calculated. The necessary separation area and the integrated necessary separation area can be appropriately set as a spherical area, a rectangular parallelepiped area, a cylindrical area, or the like.

Although not shown in the figure, when the necessary separation area or the integrated necessary separation area is selected, the avoidance pattern presentation process is then executed, and a plurality of avoidance patterns as detour pipelines, which take a detour around the necessary separation area or the integrated necessary separation area, are displayed on the menu on the screen. The avoidance pattern includes: an inverted siphon piping which takes a detour under the obstacle; an over-crossing piping which takes a detour over the obstacle; a roundabout piping which takes a detour around the obstacle in a horizontal direction; a combination bend piping which takes a detour in an oblique direction combining both a depth direction and the horizontal direction; etc. The proper avoidance pattern can be selected depending on properties of the obstacle.

In the avoidance pattern presentation process, a detour route (avoidance route) is automatically generated based on detour route design information preset to each avoidance pattern. The detour design information includes: obstacle location information indicating a relative position of the obstacle to a reference plane according to the aspect of the detour route; detour route location information indicating a relative position of the detour route including at least one bending point at a relative position to the reference plane so as to be able to avoid the obstacle; and pipe type information including at least an angle of the bent pipe and joint information constituting the detour route.

In a case that the aspect of the detour route is the inverted siphon or the over-crossing, the reference plane is set to a ground; in a case that the aspect of the detour route is the roundabout, the reference plane is set to a vertical plane perpendicular to the ground; and in a case that the aspect of the detour route is the combination bend, the reference plane is set to an inclined plane at a given angle θ to the ground or the vertical plane perpendicular to the ground.

As shown in Fig. 9D, the inverted siphon piping refers to piping in which two bent pipes are respectively arranged on upstream and downstream sides of the obstacle along a laying direction of the pipe, and a straight pipe and a cut pipe are used to connect the respective bent pipes, thereby taking a detour under the obstacle. For such inverted siphon piping, a depth from the ground to the bottom surface of the obstacle, and a width or an outer diameter in the laying direction of the pipe are input as the obstacle location information, while a ground cover over an existing pipeline as a connection source, a ground cover over the pipeline behind the detour, a distance from a pipe end of the existing pipe to the obstacle along the laying direction, a distance from the obstacle to the inverted siphon piping in a depth direction, and a length between the obstacle and the bent pipe located at the deepest part of the inverted siphon piping are automatically calculated as the detour route location information. These values are preset based on the necessary separation area or the integrated necessary separation area.

In other words, the detour piping is configured with the bent pipes disposed at the starting point and the end point of the detour as well as a relay point, and the straight pipes and the cut pipes connecting the respective bent pipes. According to the necessary separation area or the integrated necessary separation area, an actual configuration of the selected avoidance pattern, that is, the angle of the bent pipe, the number of the straight pipes, the length of the cut pipe, etc. are automatically calculated, whereby the updated three-dimensional piping diagram in which the obstacle is avoided is obtained. Note that when the avoidance pattern is applied to the three-dimensional planned line, a new intersection point IP is to be generated at the position of the bent pipe.

As shown in Figs. 9C and 9D, on the piping diagram optimized in this manner, a pipeline model drawing process (SA9) is executed by the three-dimensional pipeline diagram generation unit 18 to draw the three-dimensional symbol of each pipe obtained by the three-dimensional piping layout process along the three-dimensional planned line, thereby generating the three-dimensional pipeline diagram. The generated three-dimensional pipeline diagram is stored in the three-dimensional pipeline database (SA10). Fig. 3C shows the three-dimensional pipeline diagram drawn with the three-dimensional symbols, which are drawn by the three-dimensional pipeline diagram generation unit 18.

In other words, the three-dimensional pipeline diagram generation unit 18 draws the three-dimensional symbol of each pipe obtained by the three-dimensional piping layout process along the three-dimensional planned line, thereby generating the three-dimensional pipeline diagram. The three-dimensional symbol drawn by the three-dimensional pipeline diagram generation process is configured with the three-dimensional pipe body drawing model and the three-dimensional joint drawing model acquired from the drawing model database 10E.

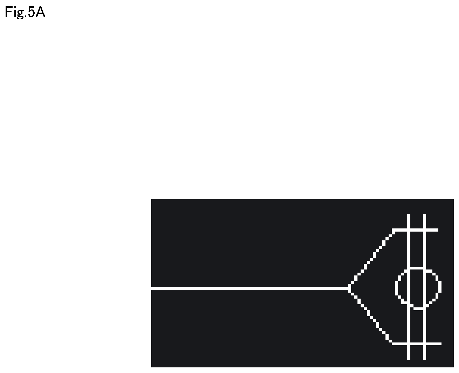

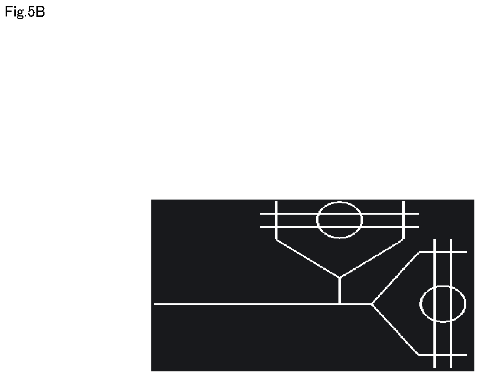

Fig. 5A shows the two-dimensional symbols representing the pipe body of the straight pipe and the joint, while Fig. 5B shows the two-dimensional symbols representing the pipe body of the branch pipe as the fitting and the joints. There is no difference between the respective two-dimensional symbols representing the joints.

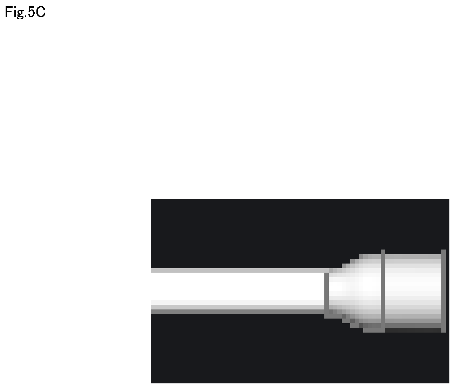

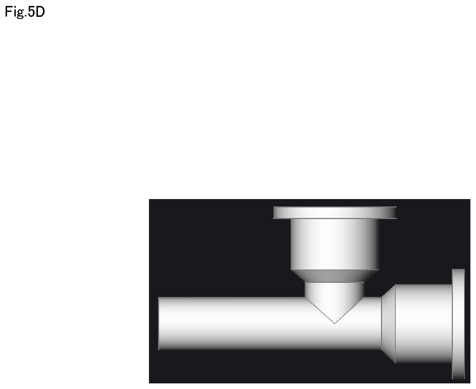

Fig. 5C shows the three-dimensional symbols indicating the pipe body of the straight pipe and the joint, while Fig. 5D shows the three-dimensional symbols indicating the pipe body of the branch pipe as the fitting and the joints. The three-dimensional symbols indicating the respective joints have different shapes greatly from each other.

Thus, even if the two-dimensional pipe body model and the two-dimensional joint model defining the existing two-dimensional symbol in the drawing model database are respectively replaced with the three-dimensional pipe body model and the three-dimensional joint model, the accurate three-dimensional symbols cannot be constructed.

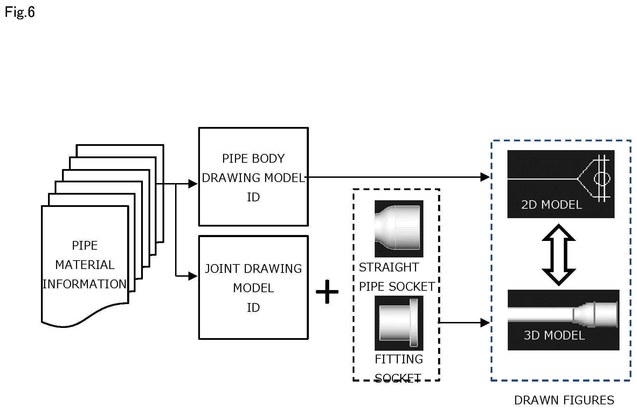

Thus, as shown in Fig. 6, the drawing model database 10E includes: the pipe material information including a pipe type, a nominal diameter, etc. for individual-based management of pipes; the three-dimensional pipe body drawing model and the three-dimensional joint drawing model respectively associated with the pipe body drawing model ID and the joint drawing model ID, which are assigned to each of the pipes managed by the pipe material information; and the two-dimensional pipe body drawing model associated with the pipe body drawing model ID. The pipe material information includes information regarding all the pipe materials that can be selected in the piping layout process. The two-dimensional pipe body drawing model is integrated with the two-dimensional joint drawing model having the same shape, and is configured such that the two-dimensional symbol can be extracted solely by the pipe body drawing model ID.

By constructing such drawing model database 10E, it is possible to easily convert the three-dimensional pipeline diagram depicted with the three-dimensional symbols into the three-dimensional pipeline diagram depicted with the two-dimensional symbols by the pipeline diagram conversion unit 19.

Even when the three-dimensional pipeline diagram, which is created by the above-described pipeline diagram design support device and depicted with the three-dimensional symbols, is not accepted as a formal drawing to be submitted to a government office, it is possible to convert it into the three-dimensional pipeline diagram depicted with the two-dimensional symbols, which is acceptable as a formal drawing, and submit the same.

The above-described application program for pipeline diagram design support is the pipeline diagram design support program of the present invention.

In other words, the pipeline diagram design support program is a program causing a computer to execute: a two-dimensional pipeline information input step of inputting two-dimensional pipeline information including a background diagram and a two-dimensional planned line drawn in the background diagram, the two-dimensional planned line indicating a laying route of a pipe; a three-dimensional pipeline attribute information input step of inputting three-dimensional pipeline attribute information including buried depth information of a pipe necessary for converting the two-dimensional planned line input at the two-dimensional pipeline information input step into a three-dimensional planned line; a three-dimensional planned line conversion step of converting the two-dimensional planned line into the three-dimensional planned line based on the three-dimensional pipeline attribute information input at the three-dimensional pipeline attribute information input step; a three-dimensional piping layout step of performing a piping layout process on the three-dimensional planned line; and a three-dimensional pipeline diagram generation step of generating the three-dimensional pipeline diagram by drawing a three-dimensional symbol of each pipe obtained at the three-dimensional piping layout step along the three-dimensional planned line.

The foregoing embodiment is intended to describe one aspect of the present invention and the technical scope of the present invention is not limited based on the description thereof, not to mention that the embodiment can be modified and designed as appropriate to the extent that the operations and effects of the present invention can be obtained.

### Reference Signs List

10: pipeline diagram design support device
10A: computer main body
10B: input device
10C: display device
10D: two-dimensional pipeline database
10E: drawing model database
10F: three-dimensional pipeline database
11: two-dimensional pipeline information input unit
12: three-dimensional pipeline attribute information input unit
13: three-dimensional planned line conversion unit
14: intersection point/control point generation unit
15: three-dimensional piping layout unit
16: three-dimensional piping layout evaluation unit
17: obstacle avoidance unit
18: three-dimensional pipeline diagram generation unit
19: pipeline diagram conversion unit

## Claims

1. A pipeline diagram design support method for designing a three-dimensional pipeline diagram configured with a plurality of pipes by using a computer, the method comprising:
a two-dimensional pipeline information input step of inputting two-dimensional pipeline information comprising a background diagram and a two-dimensional planned line drawn in the background diagram, the two-dimensional planned line indicating a laying route of a pipe;
a three-dimensional pipeline attribute information input step of inputting three-dimensional pipeline attribute information comprising buried depth information of a pipe necessary for converting the two-dimensional planned line input at the two-dimensional pipeline information input step into a three-dimensional planned line;
a three-dimensional planned line conversion step of converting the two-dimensional planned line into the three-dimensional planned line based on the three-dimensional pipeline attribute information input at the three-dimensional pipeline attribute information input step;
a three-dimensional piping layout step of performing a piping layout process on the three-dimensional planned line; and
a three-dimensional pipeline diagram generation step of generating the three-dimensional pipeline diagram by drawing a three-dimensional symbol of each pipe obtained at the three-dimensional piping layout step along the three-dimensional planned line.

2. The pipeline diagram design support method according to claim 1, wherein the three-dimensional planned line conversion step converts the two-dimensional planned line into the three-dimensional planned line by using, as the buried depth information, a value obtained by adding half a length of an outer diameter of a pipe obtained based on nominal diameter information of the pipe to ground cover information.

3. The pipeline diagram design support method according to claim 1, wherein
the three-dimensional symbol drawn at the three-dimensional pipeline diagram generation step is configured with a three-dimensional pipe body drawing model and a three-dimensional joint drawing model acquired from a drawing model database, and
the drawing model database comprises: pipe material information for individual-based management of pipes; a pipe body drawing model ID and a joint drawing model ID assigned to each of the pipes managed by the pipe material information; and a three-dimensional pipe body drawing model and a three-dimensional joint drawing model respectively associated with the pipe body drawing model ID and the joint drawing model ID.

4. A pipeline diagram design support device for designing a three-dimensional pipeline diagram configured with a plurality of pipes, the device comprising:
a two-dimensional pipeline information input unit configured to input two-dimensional pipeline information comprising a background diagram and a two-dimensional planned line drawn in the background diagram, the two-dimensional planned line indicating a laying route of a pipe;
a three-dimensional pipeline attribute information input unit configured to input three-dimensional pipeline attribute information comprising buried depth information of a pipe necessary for converting the two-dimensional planned line input by the two-dimensional pipeline information input unit into a three-dimensional planned line;
a three-dimensional planned line conversion unit configured to convert the two-dimensional planned line into the three-dimensional planned line based on the three-dimensional pipeline attribute information input by the three-dimensional pipeline attribute information input unit;
a three-dimensional piping layout unit configured to perform a piping layout process on the three-dimensional planned line; and
a three-dimensional pipeline diagram generation unit configured to generate the three-dimensional pipeline diagram by drawing a three-dimensional symbol of each pipe obtained by the three-dimensional piping layout unit along the three-dimensional planned line.

5. The pipeline diagram design support device according to claim 4, wherein the three-dimensional planned line conversion unit converts the two-dimensional planned line into the three-dimensional planned line by using, as the buried depth information, a value obtained by adding half a length of an outer diameter of a pipe obtained based on nominal diameter information of the pipe to ground cover information.

6. The pipeline diagram design support device according to claim 4, wherein
the three-dimensional symbol drawn by the three-dimensional pipeline diagram generation unit is configured with a three-dimensional pipe body drawing model and a three-dimensional joint drawing model acquired from a drawing model database, and
the drawing model database comprises: pipe material information for individual-based management of pipes; a pipe body drawing model ID and a joint drawing model ID assigned to each of the pipes managed by the pipe material information; and a three-dimensional pipe body drawing model and a three-dimensional joint drawing model respectively associated with the pipe body drawing model ID and the joint drawing model ID.

7. A pipeline diagram design support program that designs a three-dimensional pipeline diagram configured with a plurality of pipes, the program causing a computer to execute:
a two-dimensional pipeline information input step of inputting two-dimensional pipeline information comprising a background diagram and a two-dimensional planned line drawn in the background diagram, the two-dimensional planned line indicating a laying route of a pipe;
a three-dimensional pipeline attribute information input step of inputting three-dimensional pipeline attribute information comprising buried depth information of a pipe necessary for converting the two-dimensional planned line input at the two-dimensional pipeline information input step into a three-dimensional planned line;
a three-dimensional planned line conversion step of converting the two-dimensional planned line into the three-dimensional planned line based on the three-dimensional pipeline attribute information input at the three-dimensional pipeline attribute information input step;
a three-dimensional piping layout step of performing a piping layout process on the three-dimensional planned line; and
a three-dimensional pipeline diagram generation step of generating the three-dimensional pipeline diagram by drawing a three-dimensional symbol of each pipe obtained at the three-dimensional piping layout step along the three-dimensional planned line.
